# EUROPÄISCHE PATENTSCHRIFT

(11) **EP 2 053 541 B1**
(45) Veröffentlichungstag und Bekanntmachung des Hinweises auf die Patenterteilung: **08.04.2015**
(21) Anmeldenummer: 08105648.3
(22) Anmeldetag: 24.10.2008
(51) Int. Cl.: G06K 13/07, G06K 7/00, G07C 5/00, G06K 13/08

(54) **Antriebsanordnung**
Drive arrangement
Agencement d'entraînement

(30) Priorität: 25.10.2007 DE 102007051400
(43) Veröffentlichungstag der Anmeldung: 29.04.2009
(73) Patentinhaber: Continental Automotive GmbH, 30165 Hannover (DE)
(72) Erfinder: Wahler, Torsten, 78073, Bad Dürrheim (DE)

(56) Entgegenhaltungen:
- EP-A1- 0 438 914
- EP-A1- 1 451 765
- DE-U1- 20 015 100

## Beschreibung

Die Erfindung bezieht sich auf eine Antriebsanordnung für im Wesentlichen in einer Ebene nebeneinander angeordnet einer ersten Chipkartenaufnahme und einer zweiten Chipkartenaufnahme eines Fahrtschreibers, die von einem einzigen, in seiner Drehrichtung umsteuerbaren Stellmotor jeweils in einem Chipkartenschacht aus einer Eingabeposition in eine Lese-/Schreibposition und aus der Lese-/Schreibposition in die Eingabeposition translatorisch bewegbar antreibbar sind, wobei jeder Drehrichtung des Stellmotors der Antrieb einer der Chipkartenaufnahmen zugeordnet ist.

Bei einer derartigen Antriebsanordnung ist es bekannt, über einen von dem Stellmotor axial verschiebbar antreibbaren, als Zahnstange ausgebildeten Steuerschieber zwei Getriebe anzutreiben, von denen jeweils eine Schubstange zum Antrieb einer Chipkartenaufnahme translatorisch bewegbar antreibbar ist.

Diese Antriebsanordnung benötigt eine Vielzahl präziser Bauteile sowie einen großen Bauraum.

Aus DE 200 15 100 U1 ist ein Fahrtschreiber mit zwei im Wesentlichen in einer Ebene angeordneten Lese-/Schreibaggregaten für Datenkarten bekannt. Für beide Lese-/Schreibaggregate ist ein in seiner Drehrichtung umsteuerbarer Stellmotor vorgesehen, der getrieblich mit einem den Lese-/Schreibaggregaten zugeordneten Steuerscheiber in Verbindung steht. An dem Steuerschieber sind in Bezug auf dessen Bewegungsrichtungen beidseitig Mittel vorgesehen, welche ein Verbringen der Datenkarten aus der Lese-/Schreibposition in eine Entnahmeposition bewirken.

Eine Auswerfvorrichtung für IC-Karten zum wahlweisen Auswerfen einer von zwei IC-Karten offenbart EP 0 438 914 A1. Die Auswerfeinrichtung weist eine Handhabungseinrichtung, eine erste und eine zweite Herauszieheinrichtung und eine erste und eine zweite Verbindungseinrichtung auf, wobei die erste Verbindungseinrichtung zwischen der Handhabungseinrichtung und der ersten Herauszieheinrichtung und die zweite Verbindungseinrichtung zwischen der Handhabungseinrichtung und der zweiten Herauszieheinrichtung angeordnet ist.

EP 1 451 765 A1 offenbart eine Antriebsanordnung für ein in einem Fahrtschreiber angeordnetes Chipkarten-Aufnahmeaggregat zum Verbringen einer Chipkarte in eine Entnahmeposition, wobei die Antriebsanordnung einen in seiner Drehrichtung umsteuerbaren Stellmotor, einen mit dem Stellmotor getrieblich in Wirkverbindung stehenden Steuerschieber und zwischen dem Steuerschieber und dem Chipkarten-Aufnahmeaggregat vorgesehene Übertragungsmittel umfasst. Als Übertragungsmittel dient ein flexibler, druckübertragender Kraftleiter, welchem eine richtungsumlenkende Führung zugeordnet ist.

Aufgabe der Erfindung ist es daher, eine Antriebsanordnung der eingangs genannten Art zu schaffen, die aus wenigen, einfachen Bauteilen besteht und einen geringen Bauraum benötigt.

Diese Aufgabe wird erfindungsgemäß gelöst mit einer die Merkmale des Anspruchs 1 aufweisenden Antriebsanordnung.

Durch diese Ausbildung ist nur ein einziger Stellmotor zur Betätigung von Chipaufnahmen nötig, was zu einer Kosten- und Bauraumeinsparung führt.

Weiterhin reduziert sich auch der elektrische Aufwand zur Ansteuerung, da nur ein einziger Stellmotor angesteuert werden muss.

Die Verwendung nur eines einzigen Stellmotors reduziert auch das Gesamtgewicht, so dass die Gefahr von Störungen aufgrund von Schwing- und Vibrationsbelastungen reduziert wird.

Weiterhin bedarf es keinen Einrichtungen zum Schalten der Kupplungen.

Vorzugsweise erstrecken sich die erste Antriebswelle und die zweite Antriebswelle einander gegenläufig koaxial zur Zentralwelle.

Ein Aufbau mit einfach ausgestalteten Bauteilen wird dadurch erreicht, dass das erste axiale Ende der Zentralwelle von einer ersten Schlingfeder und das zweite axiale Ende von einer zweiten Schlingfeder umschlossen ist, wobei beide Schlingfedern gleiche Steigungsrichtung aufweisen und wobei das zweite Ende der ersten Schlingfeder ein Ende der ersten Antriebswelle und das zweite Ende der zweiten Schlingfeder ein Ende der zweiten Antriebswelle umschließt.

Der dabei erforderliche Bauraum ist extrem gering, da die Kupplungen weitestgehend keinen Bauraum zur Umschaltung zwischen ihren beiden Schaltstellungen benötigen.

Bei gleichen Durchmessern von Zentralwelle und Antriebswelle können identische Schlingfedern benutzt werden, was die Lagerhaltung vereinfacht und verbilligt sowie einen Falscheinbau der Schlingfedern vermeidet.

Erstrecken sich die die Zentralwelle und die erste und die zweite Antriebswelle rechtwinklig zur Bewegungsrichtung der Chipkartenaufnahme, und sind sie hinter den Chipkartenschächten angeordnet, so ist nur ein geringer Bauraum erforderlich.

Zum Drehantrieb der Zentralwelle kann der Stellmotor eine Ausgangswelle aufweisen, die ein Antriebsrad trägt, das in Eingriff mit einem auf der Zentralwelle angeordneten Zentralzahnrad steht, wobei vorzugsweise das Antriebsrad ein Schneckenrad ist, wodurch die Störanfälligkeit bei der Montage dieses Schneckengetriebes wesentlich reduziert wird.

Erstreckt sich die Ausgangswelle des Stellmotors senkrecht zur Ebene, in der die Chipkartenaufnahmen bewegbar sind, so ist der Stellmotor einfach montierbar.

Vorzugsweise umschließen die Schlingfedern koaxiale zylindrische Laufflächen der Zentralwelle und der ersten und zweiten Antriebswelle, wobei die Mantelflächen von auf der ersten und der zweiten Antriebswelle fest angeordneten Antriebshülsen die Laufflächen bilden.

Zu einer einfachen und eine Störanfälligkeit verringernden Ausbildung führt es, wenn die erste und/oder die zweite Getriebestufe ein Schneckengetriebe mit einer auf der ersten und/oder zweiten Antriebswelle angeordneten Zylinderschnecke ist.

Die Chipkartenschächte sind vorzugsweise auf einem Grundträger angeordnet.

Sind auch Zentralwelle und/oder die erste Antriebswelle und/oder die zweite Antriebswelle in Lagern drehbar gelagert an dem Grundträger angeordnet sowie ist auch der Stellmotor auf dem Grundträger angeordnet, so ist eine den Montageaufwand reduzierende Vormontage einer ganzen Baugruppe möglich.

Vorzugsweise ist der Stellmotor ein reversierbarer Elektromotor.

Um bei einer auf Freilauf geschalteten Kupplung eine Übertragung eines Restdrehmomentes auf die eigentlich abgekuppelte Antriebswelle zu vermeiden, kann an der ersten Antriebswelle und/oder an der zweiten Antriebswelle ein Reibelement in Anlage sein, durch das die Antriebswelle mit einem Reibmoment beaufschlagt ist, das etwas größer ist als das Restdrehmoment.

Eine andere Möglichkeit zur Vermeidung der Wirksamkeit des Restdrehmomentes besteht darin, dass das der ersten Schlingfeder abgewandte Ende der ersten Antriebswelle von einem ersten Ende einer dritten Schlingfeder gleicher Steigungsrichtung wie die erste Schlingfeder umschlossen ist, die mit ihrem zweiten Ende ein freies Ende einer zur ersten Antriebswelle koaxialen feststehenden ersten Achse umschließt.

In gleicher Weise kann auch das der zweiten Schlingfeder abgewandte Ende der zweiten Antriebswelle von einem ersten Ende einer vierten Schlingfeder gleicher Steigungsrichtung wie die zweite Schlingfeder umschlossen sein, die mit ihrem zweiten Ende ein freies Ende einer zur zweiten Antriebswelle koaxialen feststehenden zweiten Achse umschließt.

Dadurch wird immer die erste oder zweite Schlingfeder der auf Freilauf geschalteten Kupplung drehfest mit der ihr zugeordneten feststehenden Achse verbunden.

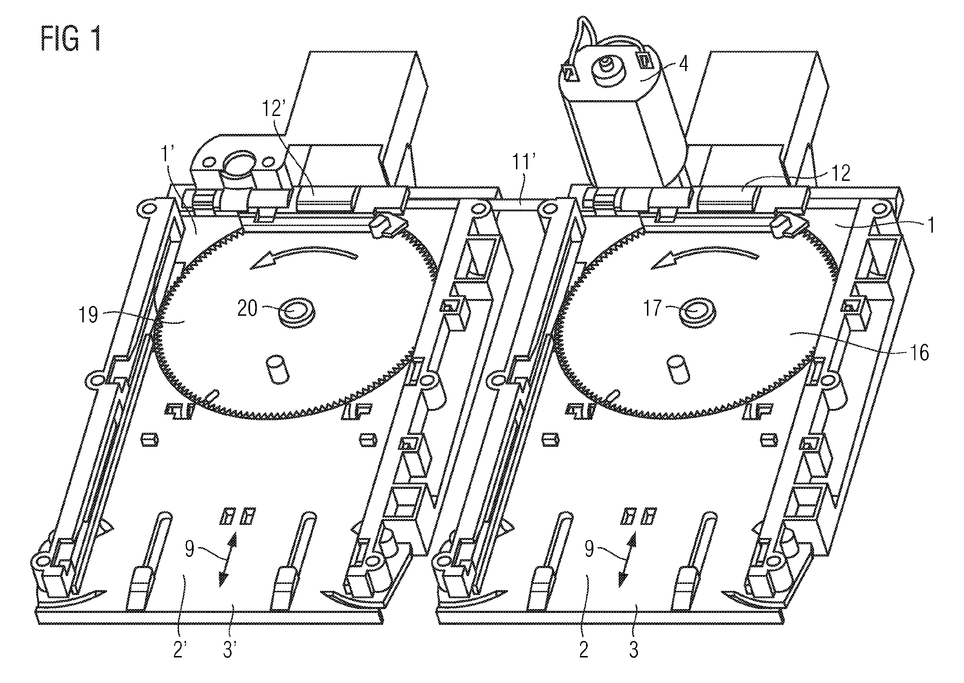

Ein Ausführungsbeispiel der Erfindung ist in der Zeichnung dargestellt und wird im Folgenden näher beschrieben. Es zeigen
- Figur 1: eine perspektivische Obenansicht einer Antriebsanordnung,

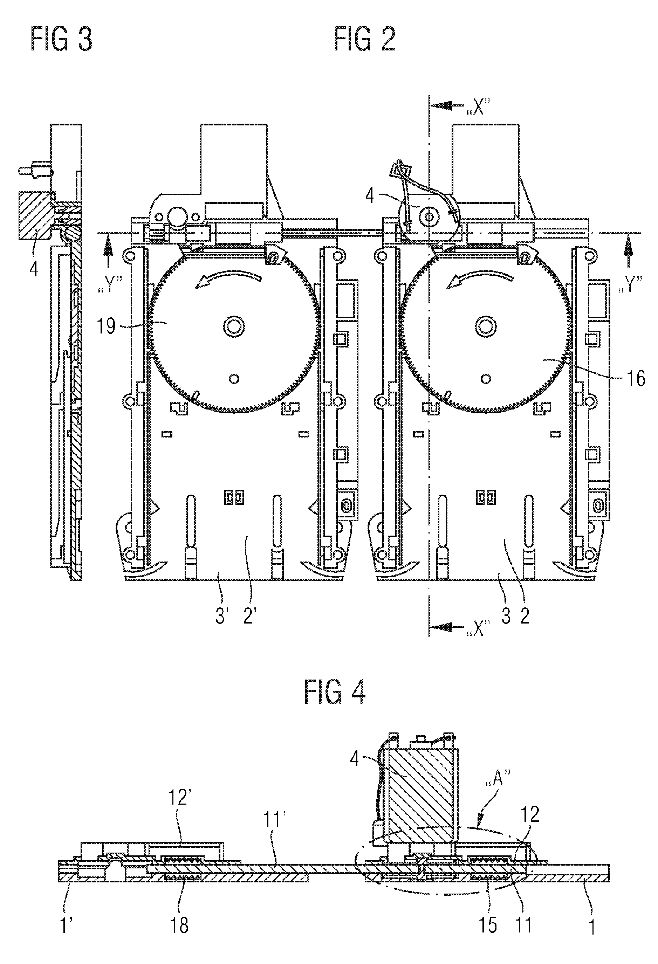

- Figur 2: eine Draufsicht der Antriebsanordnung nach Figur 1,
- Figur 3: einen Schnitt entlang der Linie X - X in Figur 2,
- Figur 4: einen Schnitt entlang der Linie Y - Y in Figur 2,

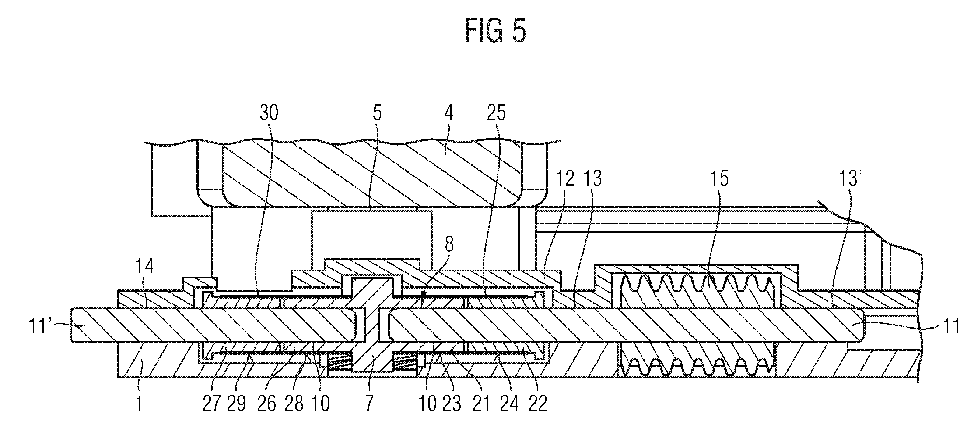

- Figur 5: einen Querschnitt des vergrößerten Ausschnitts "A" aus Figur 4,

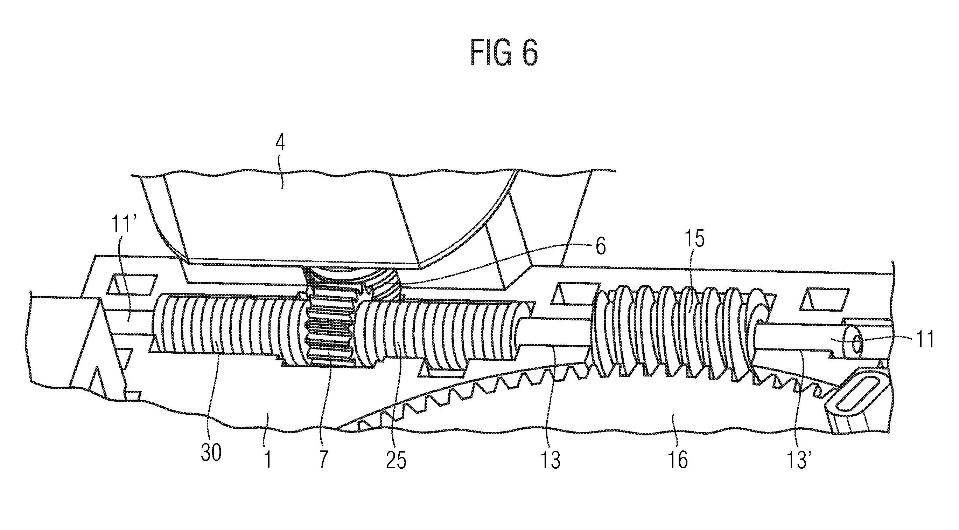

- Figur 6: eine perspektivische Ansicht des Ausschnitts "A" aus Figur 4,

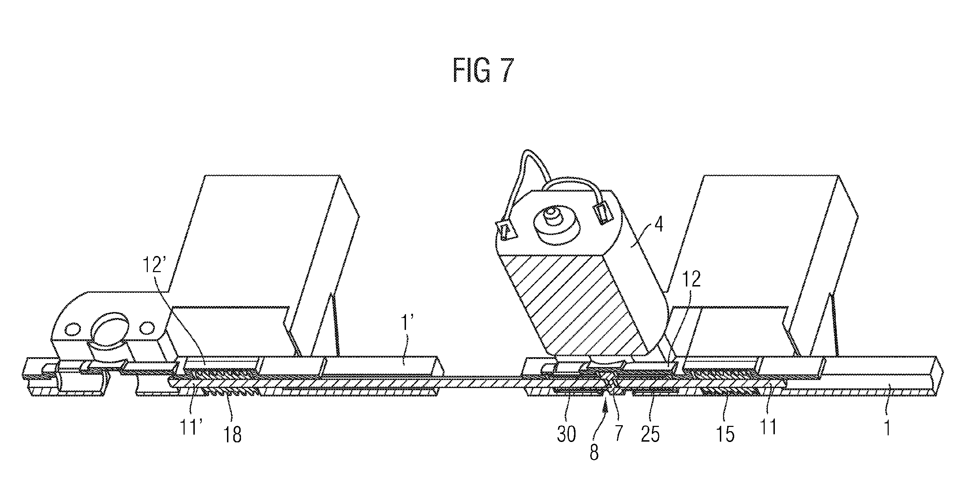

- Figur 7: eine vergrößerte perspektivische Darstellung des Antriebsbereichs der Antriebsanordnung nach Figur 1,

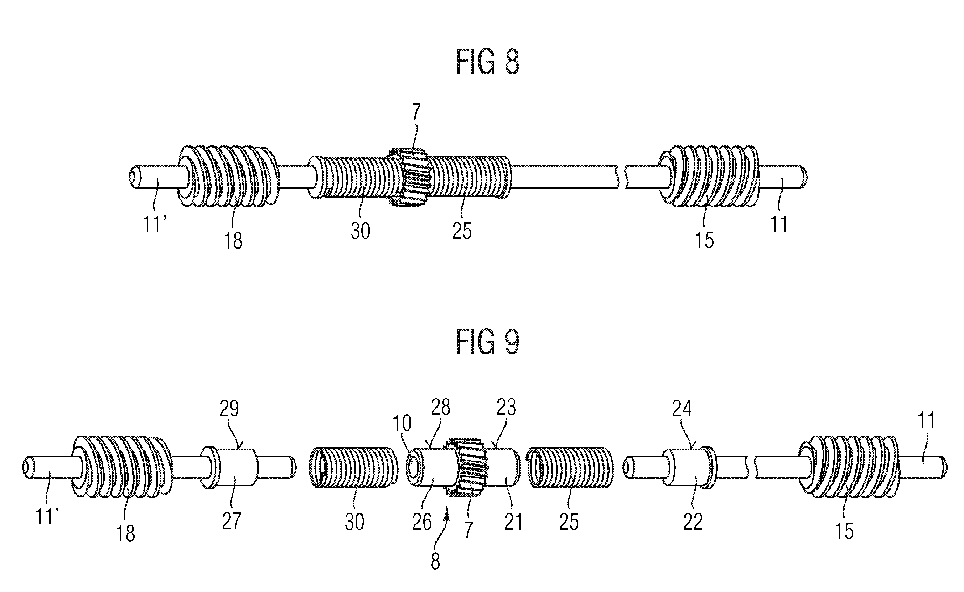

- Figur 8: eine vergrößerte perspektivische Darstellung der Baugruppe aus Zentralwelle, Antriebswellen und Schlingfedern des Antriebsbereichs nach Figur 7 und
- Figur 9: eine Explosionsdarstellung der Baugruppe nach Figur 8.

Die in den Figuren dargestellte Antriebsanordnung eines digitalen Fahrtschreibers für Kraftfahrzeuge weist zwei in einer Ebene nebeneinander angeordnete plattenartige Grundträger 1, 1' auf, auf denen Chipkartenschächte 2, 2' angeordnet sind. In den Chipkartenschächten 2, 2' ist jeweils eine nicht dargestellte Chipkartenaufnahme durch eine Antriebsanordnung zwischen einer Eingabeposition und einer Lese-/Schreibposition translatorisch bewegbar antreibbar.

In der Eingabeposition, in der die Chipkartenaufnahme teilweise aus der Einführöffnung 3, 3' des Chipkartenschachts 2, 2' herausgefahren ist, kann eine Chipkarte in die Chipkartenaufnahme eingelegt und mit der Chipkartenaufnahme in den Chipkartenschacht 2, 2' bis in die Lese-/Schreibposition vollständig hineinbewegt werden.

Die Chipkarte trägt einen Chip mit einem Datenspeicher, der in der Lese-/Schreibposition mit Kontakten zum Austausch von fahrer- und fahrzeugspezifischen Daten zwischen der Chipkarte und einer Lese- und Speichereinheit des Fahrtschreibers verbunden ist.

Die Antriebsanordnung weist einen reversierbaren Elektromotor 4 auf, der auf dem Grundträger 1 angeordnet ist und auf seiner senkrecht zur Ebene des Grundträgers 1 sich erstreckenden Ausgangswelle 5 ein Schneckenrad 6 trägt.

Das Schneckenrad 6 greift in ein Zentralzahnrad 7 einer drehbar gelagerten Zentralwelle 8 ein, wobei das Zentralzahnrad 7 mittig auf der Zentralwelle 8 fest angeordnet ist.

Die Drehachse der Zentralwelle 8 erstreckt sich quer zur Bewegungsrichtung 9 der Chipkartenaufnahmen.

Von ihren beiden Stirnseiten ausgehend weist die Zentralwelle 8 koaxiale Grundbohrungen 10, 10' auf, in die axiale Enden von Antriebswellen 11, 11' hineinragen, auf denen die Zentralwelle 8 drehbar gelagert ist.

Die Antriebswellen 11, 11' sind wiederum in Lager 13, 13', 14, 14' bildenden Lagerbohrungen drehbar gelagert, die durch in Querschnitt halbkreisförmige Vertiefungen in den Grundträgern 1, 1' und entsprechende im Querschnitt halbkreisförmige Vertiefungen in auf den Grundträgern 1, 1' angeordneten Abdeckungen 12, 12' gebildet sind.

Zwischen den beiden Lagern 13, 13' trägt die Antriebswelle 11 eine erste Zylinderschnecke 15, die in ein erstes Antriebsrad 16 eingreift und mit diesem eine erste Getriebestufe bildet.

Das erste Antriebsrad 16, durch das die erste Chipkartenaufnahme antreibbar ist, ist um eine zur Ebene des Grundträgers 1 senkrechte Drehachse 17 am Grundträger 1 drehbar gelagert.

Zwischen den beiden Lagern 14 und 14' trägt die Antriebswelle 11 eine zweite Zylinderschnecke 18, die in ein zweites Antriebsrad 19 eingreift und mit diesem eine zweite Getriebestufe bildet.

Das zweite Antriebsrad 19, durch das die zweite Chipaufnahme antreibbar ist, ist um eine zur Ebene des Grundträgers 1' senkrechte Drehachse 20 am Grundträger 1' drehbar gelagert.

Auf der Antriebswelle 1, dem ersten axialen Ende 21 der Zentralwelle 8 benachbart, ist eine erste Antriebshülse 22 drehfest angeordnet, die den gleichen Außendurchmesser wie das erste axiale Ende 21 der Zentralwelle 18 aufweist und deren zylindrische Mantelfläche eine Lauffläche 23 bildet.

Die zylindrische Mantelfläche des ersten Endes 21 der Zentralwelle 8 bildet ebenfalls eine Lauffläche 24.

Sowohl die Lauffläche 23 der Antriebswelle 1 als auch die Lauffläche 24 der Zentralwelle 8 wird von einer ersten Schlingfeder 25 umschlossen.

Auf der Antriebswelle 1' ist dem zweiten axialen Ende 26 der Zentralwelle 8 benachbart eine zweite Antriebshülse 27 drehfest angeordnet, die den gleichen Außendurchmesser wie das zweite axiale Ende 26 der Zentralwelle 8 aufweist und deren zylindrische Mantelfläche eine Lauffläche 28 bildet.

Die zylindrische Mantelfläche des zweiten Endes 26 der Zentralwelle 8 bildet ebenfalls eine Lauffläche 29.

Sowohl die Lauffläche 28 der Antriebswelle 1' als auch die Lauffläche 29 der Zentralwelle 8 wird von einer zweiten Schlingfeder 30 umschlossen.

Beide Schlingfedern 25 und 30 weisen dieselbe Steigungsrichtung auf.

Bei einem Drehantrieb des Elektromotors 4 in eine erste Drehrichtung umgreift durch die Drehung der Zentralwelle 8 die erste Schlingfeder 25 fest sowohl die Lauffläche 23 des ersten axialen Endes 21 der Zentralwelle 8 als auch die Lauffläche 24 der Antriebswelle 11, so dass das erste Antriebsrad 16 und die erste Chipkartenaufnahme angetrieben werden.

Gleichzeit befindet sich die zweite Schlingfeder 30 auf den Laufflächen 28 und 29 im Freilauf, so dass das zweite Antriebsrad 19 und die zweite Chipkartenaufnahme nicht angetrieben werden.

Bei einem Drehantrieb des Elektromotors 4 in eine zweite Drehrichtung umgreift die zweite Schlingfeder 30 die Laufflächen 28 und 29 fest, während die erste Schlingfeder 25 auf den Laufflächen 23 und 24 im Freilauf ist, so dass das zweite Antriebsrad 19 und die zweite Chipkartenaufnahme angetrieben und das erste Antriebsrad 16 und die erste Chipkartenaufnahme nicht angetrieben werden.

## Patentansprüche

1. Antriebsanordnung für im Wesentlichen in einer Ebene nebeneinander angeordnet einer ersten Chipkartenaufnahme und einer zweiten Chipkartenaufnahme eines Fahrtschreibers, die von einem einzigen, in seiner Drehrichtung umsteuerbaren Stellmotor jeweils in einem Chipkartenschacht (2, 2') aus einer Eingabeposition in eine Lese-/Schreibposition und aus der Lese-/Schreibposition in die Eingabeposition translatorisch bewegbar antreibbar sind, wobei jeder Drehrichtung des Stellmotors der Antrieb einer der Chipkartenaufnahmen zugeordnet ist, **dadurch gekennzeichnet,** dass von dem Stellmotor eine drehbar gelagerte Zentralwelle (8) drehbar antreibbar ist, deren erstes axiales Ende (21) in einer ersten Drehrichtung der Zentralwelle (8) über eine erste Kupplung mit einer drehbar gelagerten ersten Antriebswelle (11) und deren zweites axiales Ende (26) in einer zweiten Drehrichtung der Zentralwelle (8) über eine zweite Kupplung mit einer drehbar gelagerten zweiten Antriebswelle (11') verbindbar ist, und wobei von der ersten Antriebswelle (11) eine erste Getriebestufe zum Antrieb der ersten Chipkartenaufnahme und von der zweiten Antriebswelle (11') eine zweite Getriebestufe zum Antrieb der zweiten Chipkartenaufnahme antreibbar ist, wobei die erste Kupplung und die zweite Kupplung Freilaufkupplungen sind, wobei die erste Kupplung bei einer ersten Drehrichtung und die zweite Kupplung bei einer der ersten Drehrichtung entgegengesetzten zweiten Drehrichtung der Zentralwelle (8) geschlossen ist.

2. Antriebsanordnung nach Anspruch 1, **dadurch gekennzeichnet**, dass die erste Antriebswelle (11) und die zweite Antriebswelle (11') einander gegenläufig sich koaxial zur Zentralwelle (8) erstrecken.

3. Antriebsanordnung nach Anspruch 2, **dadurch gekennzeichnet**, dass das erste axiale Ende (21) der Zentralwelle (8) von einer ersten Schlingfeder (25) und das zweite axiale Ende (26) von einer zweiten Schlingfeder (30) umschlossen ist, wobei beide Schlingfedern (25, 30) gleiche Steigungsrichtung aufweisen und wobei das zweite Ende der ersten Schlingfeder (25) ein Ende der ersten Antriebswelle (11) und das zweite Ende der zweiten Schlingfeder (30) ein Ende der zweiten Antriebswelle (11') umschließt.

4. Antriebsanordnung nach einem der vorhergehenden Ansprüche, **dadurch gekennzeichnet**, dass sich die Zentralwelle (8) und die erste und die zweite Antriebswelle (11, 11') rechtwinklig zur Bewegungsrichtung der Chipkartenaufnahmen erstrecken.

5. Antriebsanordnung nach einem der vorhergehenden Ansprüche, **dadurch gekennzeichnet**, dass der Stellmotor eine Ausgangswelle (5) aufweist, die ein Antriebsrad trägt, das in Eingriff mit einem auf der Zentralwelle (8) angeordneten Zentralzahnrad (7) steht.

6. Antriebsanordnung nach Anspruch 5, **dadurch gekennzeichnet**, dass das Antriebsrad ein Schneckenrad (6) ist.

7. Antriebsanordnung nach einem der Ansprüche 5 und 6, **dadurch gekennzeichnet**, dass sich die Ausgangswelle (5) des Stellmotors senkrecht zur Ebene erstreckt, in der die Chipkartenaufnahmen bewegbar sind.

8. Antriebsanordnung nach einem der Ansprüche 3 bis 7,
**dadurch gekennzeichnet**, dass die Schlingfedern (25, 30) koaxiale zylindrische Laufflächen (23, 24, 28, 29) der Zentralwelle (8) und der ersten und zweiten Antriebswelle (11, 11') umschließen.

9. Antriebsanordnung nach Anspruch 8, **dadurch gekennzeichnet**, dass die Mantelflächen von auf der ersten und der zweiten Antriebswelle (11, 11') fest angeordneten Antriebshülsen (22, 27) die Laufflächen (24, 29) bilden.

10. Antriebsanordnung nach einem der vorhergehenden Ansprüche, **dadurch gekennzeichnet**, dass die erste und/oder die zweite Getriebestufe ein Schneckengetriebe mit einer auf der ersten und/oder zweiten Antriebswelle (11, 11') angeordneten Zylinderschnecke (15, 18) ist.

11. Antriebsanordnung nach einem der vorhergehenden Ansprüche, **dadurch gekennzeichnet**, dass jeder Chipkartenschacht auf einem Grundträger (1, 1') angeordnet ist.

12. Antriebsanordnung nach Anspruch 11, **dadurch gekennzeichnet**, dass die Zentralwelle (8) und/oder die erste Antriebswelle (11) und/oder die zweite Antriebswelle (11') in Lagern (13, 13', 14,14') drehbar gelagert sind, die an dem Grundträger (1, 1') angeordnet sind.

13. Antriebsanordnung nach Anspruch 11, **dadurch gekennzeichnet**, dass der Stellmotor auf dem Grundträger (1) angeordnet ist.

14. Antriebsanordnung nach einem der vorhergehenden Ansprüche, **dadurch gekennzeichnet**, dass der Stellmotor ein reversierbarer Elektromotor (4) ist.

15. Antriebsanordnung nach einem der vorhergehenden Ansprüche, **dadurch gekennzeichnet**, dass an der ersten Antriebswelle und/oder an der zweiten Antriebswelle ein Reibelement in Anlage ist.

16. Antriebsanordnung nach einem der Ansprüche 3 bis 14,
**dadurch gekennzeichnet**, dass das der ersten Schlingfeder abgewandte Ende der ersten Antriebswelle von einem ersten Ende einer dritten Schlingfeder gleicher Steigungsrichtung wie die erste Schlingfeder umschlossen ist, die mit ihrem zweiten Ende ein freies Ende einer zur ersten Antriebswelle koaxialen feststehenden ersten Achse umschließt.

17. Antriebsanordnung nach einem der Ansprüche 3 bis 14,
**dadurch gekennzeichnet**, dass das der zweiten Schlingfeder abgewandte Ende der zweiten Antriebswelle von einem ersten Ende einer vierten Schlingfeder gleicher Steigungsrichtung wie die zweite Schlingfeder umschlossen ist, die mit ihrem zweiten Ende ein freies Ende einer zur zweiten Antriebswelle koaxialen feststehenden zweiten Achse umschließt.

## Claims

1. Drive arrangement for a first chip card holder and a second chip card holder of a tachograph which are arranged side-by-side substantially in a plane and which can each be driven movably in translation by a single servomotor, of which the direction of rotation can be changed, in a chip card shaft (2, 2') from an input position into a reading/writing position and from the reading/writing position into the input position, wherein each direction of rotation of the servomotor of the drive is associated with one of the chip card holders, **characterized in that** a rotatably mounted central shaft (8) can be driven rotatably by the servomotor, the first axial end (21) of said central shaft can be connected in a first direction of rotation of the central shaft (8) to a rotatably mounted first drive shaft (11) via a first clutch and the second axial end (26) of said central shaft can be connected in a second direction of rotation of the central shaft (8) to a rotatably mounted second drive shaft (11') via a second clutch, and wherein a first gear stage can be driven by the first drive shaft (11) in order to drive the first chip card holder and a second gear stage can be driven by the second drive shaft (11') in order to drive the second chip card holder, wherein the first clutch and the second clutch are sprag clutches, wherein the first clutch is closed with a first direction of rotation and the second clutch is closed with a second direction of rotation of the central shaft (8) opposite the first direction of rotation.

2. Drive arrangement according to Claim 1, **characterized in that** the first drive shaft (11) and the second drive shaft (11') extend in opposite directions coaxially with the central shaft (8).

3. Drive arrangement according to Claim 2, **characterized in that** the first axial end (21) of the central shaft (8) is surrounded by a first wrap spring (25) and the second axial end (26) is surrounded by a second wrap spring (30), wherein both wrap springs (25, 30) have the same pitch direction, and wherein the second end of the first wrap spring (25) surrounds an end of the first drive shaft (11) and the second end of the second wrap spring (30) surrounds an end of the second drive shaft (11').

4. Drive arrangement according to one of the preceding claims, **characterized in that** the central shaft (8) and the first and the second drive shaft (11, 11') extend at right angles to the direction of movement of the chip card holders.

5. Drive arrangement according to one of the preceding claims, **characterized in that** the servomotor has an output shaft (5) which carries a drive wheel that is engaged with a central gearwheel (7) arranged on the central shaft (8).

6. Drive arrangement according to Claim 5, **characterized in that** the drive wheel is a worm wheel (6).

7. Drive arrangement according to one of Claims 5 and 6, **characterized in that** the output shaft (5) of the servomotor extends perpendicularly to the plane in which the chip card holders are movable.

8. Drive arrangement according to one of Claims 3 to 7, **characterized in that** the wrap springs (25, 30) surround coaxial cylindrical working surfaces (23, 24, 28, 29) of the central shaft (8) and of the first and second drive shaft (11, 11').

9. Drive arrangement according to Claim 8, **characterized in that** the lateral surfaces of drive sleeves (22, 27) arranged fixedly on the first and the second drive shaft (11, 11') form the working surfaces (24, 29).

10. Drive arrangement according to one of the preceding claims, **characterized in that** the first and/or the second gear stage is a worm gear with a cylinder worm (15, 18) arranged on the first and/or second drive shaft (11, 11').

11. Drive arrangement according to one of the preceding claims, **characterized in that** each chip card shaft is arranged on a base carrier (1, 1').

12. Drive arrangement according to Claim 11, **characterized in that** the central shaft (8) and/or the first drive shaft (11) and/or the second drive shaft (11') are mounted rotatably in bearings (13, 13', 14, 14') that are arranged on the base carrier (1, 1').

13. Drive arrangement according to Claim 11, **characterized in that** the servomotor is arranged on the base carrier (1).

14. Drive arrangement according to one of the preceding claims, **characterized in that** the servomotor is a reversible electric motor (4).

15. Drive arrangement according to one of the preceding claims, **characterized in that** a friction element is placed against the first drive shaft and/or the second drive shaft.

16. Drive arrangement according to one of Claims 3 to 14, **characterized in that** the end of the first drive shaft remote from the first wrap spring is surrounded by a first end of a third wrap spring having the same pitch direction as the first wrap spring, said third wrap spring surrounding, with its second end, a free end of a fixed first shaft coaxial with the first drive shaft.

17. Drive arrangement according to one of Claims 3 to 14, **characterized in that** the end of the second drive shaft remote from the second wrap spring is surrounded by a first end of a fourth wrap spring having the same pitch direction as the second wrap spring, said fourth wrap spring surrounding, with its second end, a free end of a fixed second shaft coaxial with the second drive shaft.

## Revendications

1. Agencement d'entraînement d'un premier logement de carte à puce et d'un deuxième logement de carte à puce d'un tachygraphe, qui sont disposés l'un à côté de l'autre dans un plan et qui peuvent être entraînés en un déplacement de translation par un moteur de commande, dont le sens de rotation peut être inversé, respectivement dans un puits (2, 2') de carte à puce, d'une position d'entrée à une position de lecture/écriture et de la position de lecture/écriture à la position d'entrée, l'un des logements de carte à puce étant associé à chaque sens de rotation du moteur de commande de l'entraînement, **caractérisé en ce que**, par le moteur de commande, peut être entraîné en rotation un arbre (8) central monté tournant, dont le premier bout (21) axial peut, dans un premier sens de rotation de l'arbre (8) central, être relié, par un premier accouplement, à un premier arbre (11) d'entraînement monté tournant et dont le second bout (26) axial peut, dans un deuxième sens de rotation de l'arbre (8) central, être relié, par un deuxième accouplement, à un deuxième arbre (11') d'entraînement monté tournant et dans lequel un deuxième étage de transmission peut être entraîné par le deuxième arbre (11') d'entraînement pour l'entraînement du deuxième logement de carte à puce, le premier accouplement et le deuxième accouplement étant des accouplements à roue libre, le premier accouplement étant fermé pour un premier sens de rotation et le deuxième accouplement pour un second sens de rotation, inverse du premier sens de rotation, de l'arbre (8) central.

2. Agencement d'entraînement suivant la revendication 1, **caractérisé en ce que** le premier arbre (11) d'entraînement et le deuxième arbre (11') d'entraînement s'étendent en sens opposé l'un à l'autre coaxialement à l'arbre (8) central.

3. Agencement d'entraînement suivant la revendication 2, **caractérisé en ce que** le premier bout (21) axial de l'arbre (8) central est entouré d'un premier ressort (25) enroulé et le deuxième bout (26) axial d'un deuxième ressort (30) enroulé, les deux ressorts (25, 30) enroulés ayant le même sens de pas et la deuxième extrémité du premier ressort (25) enroulé entourant un bout du premier arbre (11) d'entraînement et la deuxième extrémité du deuxième ressort (30) enroulé un bout du deuxième arbre (11') d'entraînement.

4. Agencement d'entraînement suivant l'une des revendications précédentes, **caractérisé en ce que** l'arbre (8) central et le premier et le deuxième arbres (11, 11') d'entraînement s'étendent à angle droit par rapport à la direction de déplacement des logements de carte à puce.

5. Agencement d'entraînement suivant l'une des revendications précédentes, **caractérisé en ce que** le moteur de commande a un arbre (5) de sortie, qui porte une roue d'entraînement en prise avec une roue (7) dentée centrale, montée sur l'arbre (8) central.

6. Agencement d'entraînement suivant la revendication 5, **caractérisé en ce que** la roue d'entraînement est une roue (6) à vis sans fin.

7. Agencement d'entraînement suivant l'une des revendications 5 et 6, **caractérisé en ce que** l'arbre (5) de sortie du moteur de commande s'étend perpendiculairement au plan dans lequel les logements de carte à puce peuvent être déplacés.

8. Agencement d'entraînement suivant l'une des revendications 3 à 7, **caractérisé en ce que** les ressorts (25, 30) enroulés entourent des surfaces (23, 24, 28, 29) cylindriques coaxiales de glissement de l'arbre (8) central et des premier et deuxième arbres (11, 11') d'entraînement.

9. Agencement d'entraînement suivant la revendication 8, **caractérisé en ce que** les surfaces latérales de douilles (22, 27) d'entraînement, montées fixes sur les premier et deuxième arbres (11, 11') d'entraînement, forment les surfaces (24, 29) de glissement.

10. Agencement d'entraînement suivant l'une des revendications précédentes, **caractérisé en ce que** le premier et/ou le deuxième étage de transmission est une transmission à vis sans fin ayant une vis (15, 18) cylindrique montée sur le premier et/ou sur le deuxième arbre (11, 11') d'entraînement.

11. Agencement d'entraînement suivant l'une des revendications précédentes, **caractérisé en ce que** chaque puits de carte à puce est monté sur un support (1, 1') de base.

12. Agencement d'entraînement suivant la revendication 11, **caractérisé en ce que** l'arbre (8) central et/ou le premier arbre (11) d'entraînement et/ou le deuxième arbre (11') d'entraînement sont montés tournants dans des paliers (13, 13', 14, 14'), qui sont mis sur le support (1, 1') de base.

13. Agencement d'entraînement suivant la revendication 11, **caractérisé en ce que** le moteur de commande est mis sur le support (1) de base.

14. Agencement d'entraînement suivant l'une des revendications précédentes, **caractérisé en ce que** le moteur de commande est un moteur (4) électrique réversible.

15. Agencement d'entraînement suivant l'une des revendications précédentes, **caractérisé en ce qu'**un élément de friction est appliqué au premier arbre d'entraînement et/ou au deuxième arbre d'entraînement.

16. Agencement d'entraînement suivant l'une des revendications 3 à 14, **caractérisé en ce que** le bout, éloigné du premier ressort enroulé, du premier arbre d'entraînement est entouré d'une première extrémité d'un troisième ressort enroulé de même sens de pas que celui du premier ressort enroulé, qui entoure, par sa deuxième extrémité, une extrémité libre d'un premier axe fixe, coaxial au premier arbre d'entraînement.

17. Agencement d'entraînement suivant l'une des revendications 3 à 14, **caractérisé en ce que** le bout, éloigné du deuxième ressort enroulé, du deuxième arbre d'entraînement est entouré d'une première extrémité d'un quatrième ressort enroulé de même sens de pas que le deuxième ressort enroulé, qui entoure, par sa deuxième extrémité, une extrémité libre d'un deuxième axe fixe, coaxial au deuxième arbre d'entraînement.
